# EUROPEAN PATENT APPLICATION

(11) **EP 1 107 511 A2**
(43) Date of publication of application: **13.06.2001**
(21) Application number: 00650106.8
(22) Date of filing: 21.08.2000
(51) Int. Cl.: H04L 12/24

(54) **System, device, and method for non-disruptive shutdown in a communications network**

(30) Priority: 08.12.1999 US 457180
(71) Applicant: Nortel Networks Corporation, Montreal, Quebec H2Y 3Y4 (CA)
(72) Inventor: Cain, Bradley, Cambridge, MA 02139 (US)
(74) Representative: Boyce, Conor

(57) **Abstract**

When a network node decides to stop routing protocol messages, the network node signals that it is not operational, but continues routing protocol messages for a predetermined timeout period. The network node may stop routing protocol messages after the predetermined timeout period.

## Description

### FIELD OF THE INVENTION

The present invention relates generally to communication systems, and more particularly to non-disruptive shutdown in a communication network.

### BACKGROUND OF THE INVENTION

In today's information age, computers and computer peripherals are often internetworked over a communication network. The communication network includes a number of network nodes that interoperate to route protocol messages within the communication network. These network nodes typically run various routing protocols in order to determine forwarding paths for routing protocol messages within the communication network.

When a network node fails or otherwise becomes non-operational, the other network nodes need to route the protocol messages around the failed network node. The network nodes typically rely on "keep-alive" messages to determine whether a particular network node is operational. A network node may be considered to be operational as long as it is sending "keep-alive" messages to its neighboring network nodes or is responding to "keep-alive" messages sent by its neighboring network nodes, as determined by the particular routing protocol employed by the various network nodes.

When a network node stops sending or responding to "keep-alive" messages (which is referred to hereinafter as "shutdown"), it takes some amount of time before the other network nodes detect that the network node has stopped sending or responding to "keep-alive" messages and begin routing protocol messages around the network node (referred to as "reconvergence"). Therefore, the other network nodes continue routing protocol messages to the network node for some amount of time after the network node stops sending or responding to "keep-alive" messages. Because the network node is not operational, these protocol messages are simply dropped.

### SUMMARY OF THE INVENTION

In accordance with one aspect of the invention, a network node signals that it is not operational and continues routing protocol messages for a predetermined timeout period upon deciding to stop routing protocol messages. This allows the other network nodes to detect that the network node is not operational and begin routing protocol messages around the network node before the network node stops routing protocol messages. In this way, the network node is able to shut down without disrupting protocol message routing within the communication network.

### BRIEF DESCRIPTION OF THE DRAWINGS

The foregoing and other objects and advantages of the invention will be appreciated more fully from the following further description thereof with reference to the accompanying drawings wherein:
FIG. 1 is a logic flow diagram showing exemplary logic to stop routing protocol messages in accordance with an embodiment of the present invention;
FIG. 2 is a block diagram showing an exemplary network node in accordance with an embodiment of the present invention; and
FIG. 3 is a system diagram showing an exemplary communication system in accordance with an embodiment of the present invention.

### DETAILED DESCRIPTION OF A PREFERRED EMBODIMENT

In an embodiment of the invention, a particular network node (referred to hereinafter as the "shutdown" network node in order to differentiate it from the other network nodes) stops sending or responding to "keep-alive" messages for a predetermined timeout period before the shutdown network node stops routing protocol messages. The predetermined timeout period is preferably selected so that the other network nodes are able to detect that the network node has stopped sending or responding to "keep-alive" messages and begin routing protocol messages around the shutdown network node (i.e., reconverge) before the shutdown network node stops routing protocol messages, and therefore the predetermined timeout period is typically greater than or equal to the timeout period defined by the particular routing protocol used by the network nodes. Because the other network nodes have already begun routing protocol messages around the shutdown network node by the time the shutdown network node has stopped sending or responding to "keep-alive" messages, no protocol messages are mis-routed to the shutdown network node, and therefore no protocol messages are dropped due to the shutdown network node.

More particularly, when the shutdown network node decides to stop routing protocol messages, for example, upon being instructed to do so through a network management interface or upon detecting an internal failure (for example, as described in the related US patent application entitled SYSTEM, DEVICE, AND METHOD FOR DETERMINING THE OPERATIONAL STATUS OF A NETWORK DEVICE, filed in the name of Bradley Cain on even date, the shutdown network node stops sending or responding to "keep-alive" messages, and starts a timer. The timer runs for the predetermined timeout period, which is typically set according to the timeout period for the particular routing protocol being used by the network nodes (for example, 30 seconds for OSPF). Once the timer expires, the shutdown network node can safely stop routing protocol messages.

After the shutdown network node stops sending or responding to "keep-alive" messages but before the other network nodes detect that the shutdown network node is no longer sending or responding to "keep-alive" messages, the other network nodes may route protocol messages to the shutdown network node, and the shutdown network node in turn routes the protocol messages as usual.

When the other network nodes detect that the shutdown network node is no longer sending or responding to "keep-alive" messages, the other network nodes use the routing protocol to determine new routes that bypass the shutdown network node. In accordance with the present invention, the other network nodes use an existing routing protocol mechanism to detect that the shutdown network node is no longer sending or responding to "keep-alive" messages. Therefore, the other network nodes operate as usual, and require no logic changes in order to detect and bypass the shutdown network node.

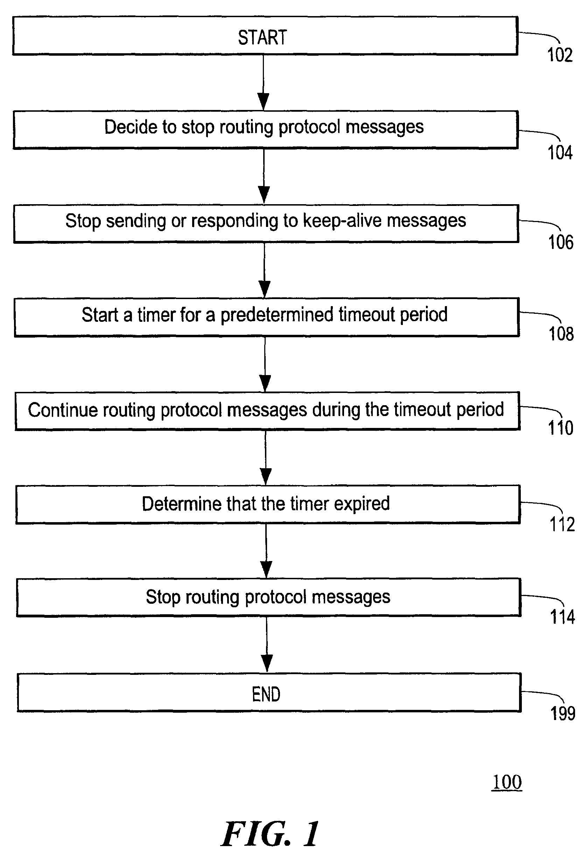

FIG. 1 is a logic flow diagram showing exemplary logic 100 to stop routing protocol messages in accordance with an embodiment of the present invention. Beginning at step 102, and upon deciding to stop routing protocol messages, in step 104, the logic stops sending or responding to "keep-alive" messages, in step 106, and starts a timer for a predetermined timeout period, in step 108. The logic continues routing protocol messages during the timeout period, in step 110. Upon determining that the timer expired, in step 112, the logic stops routing protocol messages, in step 114. The logic 100 terminates in step 199.

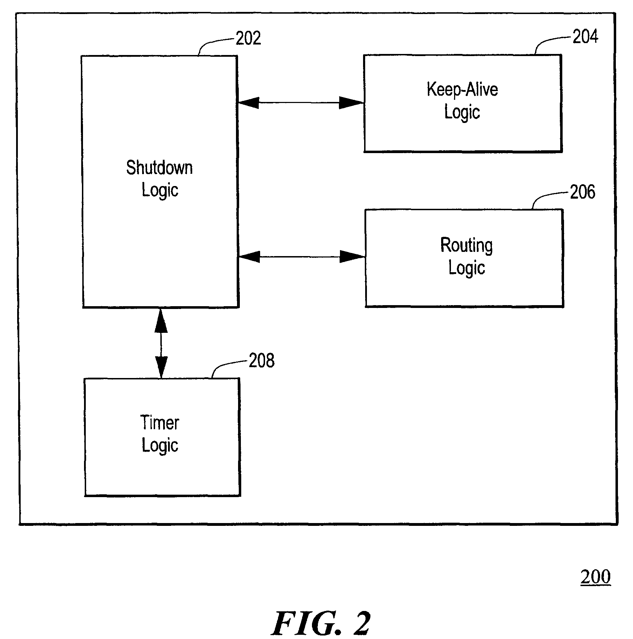

FIG. 2 is a block diagram showing an exemplary network node 200 in accordance with an embodiment of the present invention. The exemplary network node 200 includes, among other things, shutdown logic 202, keep-alive logic 204, routing logic 206, and timer logic 208. The shutdown logic 202 is responsible for controlling the shutdown process for the network node 200. The keep-alive logic 204 is responsible for sending or responding to"keep-alive" messages. The routing logic 206 is responsible for routing protocol messages. The timer logic 208 is responsible for timer functions within the network node 200.

When the shutdown logic 202 decides to stop the routing logic 206 from routing protocol messages, for example, upon receiving an instruction through a network management interface (not shown) or upon detecting a failure, the shutdown logic 202 first signals the keep-alive logic 204 to stop sending or responding to "keep-alive" messages. The shutdown logic 202 then starts a timer for a predetermined timeout period using the timer logic 208. During the timeout period, the shutdown logic 202 signals or otherwise enables the routing logic 206 to continue routing protocol messages. When the shutdown logic 202 determines that the timer has expired, the shutdown logic 202 signals the routing logic 206 to stop routing protocol messages.

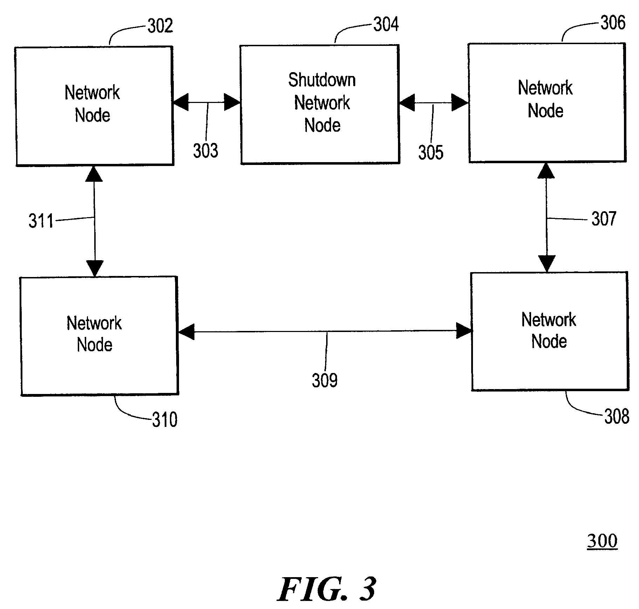

FIG. 3 is a system diagram showing an exemplary communication system 300 in accordance with an embodiment of the present invention. The exemplary communication system 300 includes a plurality of interconnected network nodes (302, 304, 306, 308, 310). The network node 304 is the shutdown network node. The network node 302 is coupled to the shutdown network node 304 over the interface 303 and to the network node 310 over the interface 311. The shutdown network node 304 is coupled to the network node 302 over the interface 303 and to the network node 306 over the interface 305. The network node 305 is coupled to the shutdown network node 304 over the interface 305 and to the network node 308 over the interface 307. The network node 308 is coupled to the network node 306 over the interface 307 and to the network node 310 over the interface 309. The network node 310 is coupled to the network node 308 over the interface 309 and to the network node 302 over the interface 311.

During normal operation of the network, when the shutdown network node 304 is still routing protocol messages and the other network nodes (302, 306, 308, 310) have not begun routing protocol messages around the shutdown network node 304, communications between the network node 302 and the network node 306 may be routed through the shutdown network node 304, since the path through the shutdown network node 304 is the shortest path (at least by hop count).

When the shutdown network node 304, and particularly the shutdown logic 202 in the shutdown network node 304, decides to stop routing protocol messages, the shutdown network node 304 stops sending or responding to "keep-alive" messages, but continues routing protocol messages. As part of the normal routing protocol operation, the other network nodes (302, 306, 308, 310) detect that the shutdown network node 304 has stopped sending or responding to "keep-alive" messages, and use the routing protocol to determine new routes that bypass the shutdown network node 304. In particular, communications between the network node 302 and the network node 306 may be routed through the network node 308 and the network node 310 rather than through the shutdown network node 304. Once the other network nodes (302, 306, 308, 310) have begun routing protocol messages around the shutdown network node 304 (i.e., after a predetermined timeout period), the shutdown network node 304 stops routing protocol messages.

It should be noted that the "keep-alive" messages referred to herein may be any type of signal that is used to indicate whether or not a particular network node is operational, either as part of a routing protocol or otherwise. When the shutdown network node stops sending or responding to "keep-alive" messages, it essentially signals to the other nodes that it is no longer operational, even though the shutdown network node continues routing protocol messages during the timeout period. Thus, various embodiments of the present invention may use practically any mechanism for signaling that the shutdown network node is not operational. The present invention is in no way limited to the type of "keep-alive" message or the type of mechanism that is used by the other network nodes to detect that the shutdown network node has stopped sending or responding to "keep-alive" messages and begin routing protocol messages around the shutdown network node.

In a preferred embodiment of the present invention, predominantly all of the shutdown logic and related logic is implemented as a set of computer program instructions that are stored in a computer readable medium and executed by an embedded microprocessor system within the shutdown network node. Preferred embodiments of the invention may be implemented in any conventional computer programming language. For example, preferred embodiments may be implemented in a procedural programming language *(e.g.,* "C") or an object oriented programming language *(e.g.,* "C++"). Alternative embodiments of the invention may be implemented using discrete components, integrated circuitry, programmable logic used in conjunction with a programmable logic device such as a Field Programmable Gate Array (FPGA) or microprocessor, or any other means including any combination thereof.

Alternative embodiments of the invention may be implemented as a computer program product for use with a computer system. Such implementation may include a series of computer instructions fixed either on a tangible medium, such as a computer readable media (e.g., a diskette, CD-ROM, ROM, or fixed disk), or fixed in a computer data signal embodied in a carrier wave that is transmittable to a computer system via a modem or other interface device, such as a communications adapter connected to a network over a medium. The medium may be either a tangible medium (*e.g.,* optical or analog communications lines) or a medium implemented with wireless techniques (*e.g.,* microwave, infrared or other transmission techniques). The series of computer instructions embodies all or part of the functionality previously described herein with respect to the system. Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies. It is expected that such a computer program product may be distributed as a removable medium with accompanying printed or electronic documentation (*e.g.,* shrink wrapped software), preloaded with a computer system (e.g., on system ROM or fixed disk), or distributed from a server or electronic bulletin board over the network (*e.g.,* the Internet or World Wide Web).

The present invention may be embodied in other specific forms without departing from the essence or essential characteristics. The described embodiments are to be considered in all respects only as illustrative and not restrictive.

## Claims

1. A shutdown method for a network node in a communication network, the method comprising:
deciding to stop routing protocol messages;
signaling that the network node is not operational upon deciding to stop routing protocol messages; and
continuing to route protocol messages for a predetermined timeout period after signaling that the network node is not operational.

2. The shutdown method of claim 1, wherein deciding to stop routing protocol messages comprises receiving an instruction through a network management interface.

3. The shutdown method of claim 1, wherein deciding to stop routing protocol messages comprises detecting an internal failure within the device.

4. The shutdown method of claim 1, wherein signaling that the network node is not operational comprises forcing the device to stop sending keep-alive messages.

5. The shutdown method of claim 1, wherein signaling that the network node is not operational comprises forcing the device to stop responding to keep-alive messages.

6. The shutdown method of claim 1, wherein continuing to route protocol messages for the predetermined timeout period comprises:
starting a timer for the predetermined timeout period; and
continuing to route protocol messages while the timer is running.

7. A device comprising:
signaling logic operably coupled to send signals to indicate that the device is operational;
routing logic operably coupled to route protocol messages; and
shutdown logic operably coupled to decide to stop routing protocol messages and to prevent the signaling logic from sending the signals for a predetermined timeout period while enabling the routing logic to continue routing protocol messages for the predetermined timeout period upon deciding to stop routing protocol messages.

8. A program product comprising a computer readable medium having embodied therein a computer program for performing a network anode shutdown, the computer program comprising:
signaling logic programmed to send signals to indicate that the device is operational;
routing logic programmed to route protocol messages; and
shutdown logic programmed to decide to stop routing protocol messages and to prevent the signaling logic from sending the signals for a predetermined timeout period while enabling the routing logic to continue routing protocol messages for the predetermined timeout period upon deciding to stop routing protocol messages.

9. A communication system comprising a plurality of interconnected network nodes, wherein a first network node is operably coupled to signal that the first network node is not operational and to continue routing protocol messages for a predetermined timeout period after signaling that the first network node is not operational, and wherein a second network node is operably coupled to continue routing protocol messages to the first network node during at least a portion of the predetermined timeout period until the second network node determines that the first network node is not operational.

10. A communication system comprising a plurality of interconnected nodes, wherein each of the nodes comprises:
means for determining when the node is not operational; and
means for forwarding protocol messages for a predetermined time period after determining that the node is not operational.
